# EUROPEAN PATENT APPLICATION

(11) **EP 1 821 133 A1**
(43) Date of publication of application: **22.08.2007**
(21) Application number: 06003149.9
(22) Date of filing: 16.02.2006
(51) Int. Cl.: G02C 9/00

(54) **Plate-shaped spectacles and sunshade-clip assembly**

(71) Applicant: Lee, Suk Jae, Daegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(72) Inventor: Lee, Suk Jae, Daegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(74) Representative: Beetz & Partner

(57) **Abstract**

Disclosed herein is a plate-shaped spectacles and sunshade-clip assembly. The assembly comprises spectacles(1) having a spectacles frame(2) configured to receive a pair of prescription lenses(3), a sunshade-clip(50) having a pair of colored lenses and configured to have a shape corresponding to that of the spectacles(1), and two or more magnets(Ms) to detachably attach the sunshade-clip to the spectacles. The spectacles frame(2) of the spectacles(1) is a plate-shaped member formed by processing a plate or performing an injection molding process. One or more spectacles magnets(Ms) are fixedly inserted into the spectacles frame(2). The sunshade-clip(50) further has one or more clip magnets fixed at positions corresponding to the spectacles magnets(Mc) to be detachably attached to the spectacles magnets, respectively. With this configuration, each attachment/detachment between the sunshade-clip and the spectacles can be accomplished.

## Description

### BACKGROUND OF THE INVENTION

### Field of the Invention

The present invention relates to a plate-shaped spectacles and sunshade-clip assembly, and, more particularly, to a plate-shaped spectacles and sunshade-clip assembly in which a sunshade-clip is detachably attached to spectacles having a plate-shaped frame by use of magnets.

### Description of the Related Art

In conjunction with various kinds of spectacles, more particularly, spectacles having a flat plate-made frame and a sunshade-clip having a pair of colored lenses, the present invention aims to achieve an improved configuration to detachably attach the sunshade-clip to the spectacles by use of a plurality of magnets.

Although various shapes of spectacles and sunshade-clip assemblies using magnets have been already proposed in the prior art, there still exists a need for an improved configuration thereof.

Considering the configuration of a conventional spectacles and sunshade-clip assembly, a sunshade-clip, which has the same shape as that of spectacles, is provided with a pair of arm members protruding from opposite ends thereof. The arm members of the sunshade-clip are configured to receive magnets, respectively, and the spectacles are provided with one or more magnets at positions corresponding to the magnets of the sunshade-clip. With this configuration, the sunshade-clip is able to be detachably attached to the spectacles via a magnetic attraction between the magnets of both the spectacles and the sunshade-clip. Accordingly, the spectacles are usable as sunglasses if necessary.

Conventionally, a frame of the spectacles, applicable to the above-described configuration, has been fabricated by bending and welding a wire. However, to mount the magnets to the wire frame of the spectacles, it is necessary to provide specific positions of the wire frame with separate magnet housings or protruding arm members for receiving the magnets. Therefore, the wire frame of the spectacles has a problem of a complicated structure.

Furthermore, providing the wire frame of the spectacles, more particularly, lens frame positions of the wire frame, with such protruding magnet receiving members causes deterioration in the outer appearance of the spectacles, and also causes an inconvenience in use or storage, for example, the protruding magnet receiving members may become caught on clothing when stored in pockets.

### SUMMARY OF THE INVENTION

Therefore, the present invention has been made in view of the above problems, and it is an object of the present invention to provide a plate-shaped spectacles and sunshade-clip assembly wherein magnets, which are used to detachably attach a plate-shaped spectacles to a sunshade-clip having a shape corresponding to that of the spectacles, can be hidden as much as possible in their assembled state, and the shape of the sunshade-clip can be selected within a wider range, whereby an improved outer appearance and convenient use of the spectacles and sunshade-clip assembly can be accomplished.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a plate-shaped spectacles and sunshade-clip assembly according to a first embodiment of the present invention;
FIG. 2 is a partial perspective view illustrating an alternative configuration of the first embodiment of the present invention;
FIG. 3 is a perspective view illustrating various positions of magnets to be mounted into spectacles according to the first embodiment of the present invention;
FIGS. 4 to 6 are sectional views taken along the line A-A of FIG. 3, illustrating different configurations of a magnet mounted in the spectacles according to the first embodiment of the present invention;
FIG. 7 is a perspective view illustrating a spectacles and sunshade-clip assembly according to a second embodiment of the present invention;
FIG. 8 is a perspective view illustrating a first alternative configuration of the second embodiment of the present invention;
FIG. 9 is a rear partial perspective view illustrating a second alternative configuration of the second embodiment of the present invention;
FIG. 10 is a perspective view illustrating a third alternative configuration of the second embodiment of the present invention;
FIG. 11 is a rear partial perspective view of FIG. 10, in particular, the circle of FIG. 11 illustrating a fourth alternative configuration of the second embodiment;
FIG. 12 is a perspective view illustrating a spectacles and sunshade-clip assembly according to a third embodiment of the present invention, in particular, the circle of FIG. 12 illustrating the important part of the third embodiment in enlarged scale; and
FIG. 13 is a rear partial perspective view of FIG. 12.

### DESCRIPTION OF THE PREFERRED EMBODIMENTS

Now, preferred embodiments of the present invention will be explained with reference to the accompanying drawings.

In the following description, both spectacles and sunshade-clip are articles having symmetrical left and right sides, and thus, only one side will be designated by reference numerals and explained.

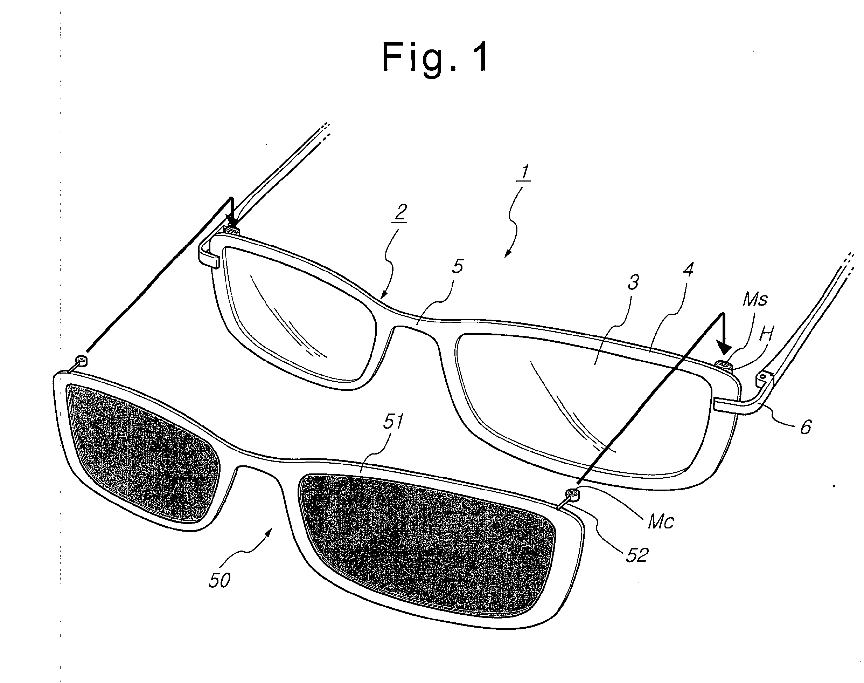

Referring to FIG. 1, a plate-shaped spectacles and sunshade-clip assembly according to a first embodiment of the present invention is illustrated in perspective view. As shown in FIG. 1, spectacles 1 according to the present embodiment include a spectacles frame 2 having a plate shape suitable for achieving the object of the present invention. More particularly, the plate-shaped spectacles frame 2 is fabricated via a press process and laser cutting using a metal or plastic plate or an injection molding, differently from the previously described conventional spectacles frame fabricated by bending and welding a wire.

The spectacles frame 2 is divided into a lens frame portion 4 for receiving a pair of prescription lenses 3, and a nose bridge portion 5, which are integrally formed with each other by processing a single plate. Also, a pair of hinge units 6 may be integrally formed with the spectacles frame 2. Alternatively, as shown in FIG. 1, the hinge units 6 may be separately fabricated and fixed to opposite ends of the lens frame portion 4 via welding. In both cases, the manufacturing process of the spectacles frame 2 can be greatly simplified as compared to the prior art, and the resulting spectacles frame 2 provides the spectacles 1 with an improved plate-shaped outer appearance.

The spectacles frame 2 is provided, at an upper end of a rear surface thereof, with a pair of magnet holders H, such that spectacles magnets Ms are inserted into the magnet holders H, respectively.

Similarly, a sunshade-clip 50 usable with the spectacles 1 having the above-described configuration includes a plate-shaped integral clip frame 51, which is made of a metal or plastic material. Similarly, the clip frame 51 is provided with a pair of magnet arms 52, which protrude rearward from an upper end of the clip frame 51 at positions corresponding to the magnet holders H of the spectacles 1. Clip magnets Mc corresponding to the spectacles magnets Ms are inserted into the magnet arms 52, respectively.

With the above-described configuration, the sunshade-clip 50 is able to be detachably attached to the spectacles 1 by use of both the spectacles magnets Ms and the clip magnets Mc, to form the spectacles and sunshade-clip assembly. In this case, by virtue of the plate shape of the spectacles 1 and the sunshade-clip 50, the resulting spectacles and sunshade-clip assembly exhibits an improved outer appearance with a minimum protruding region.

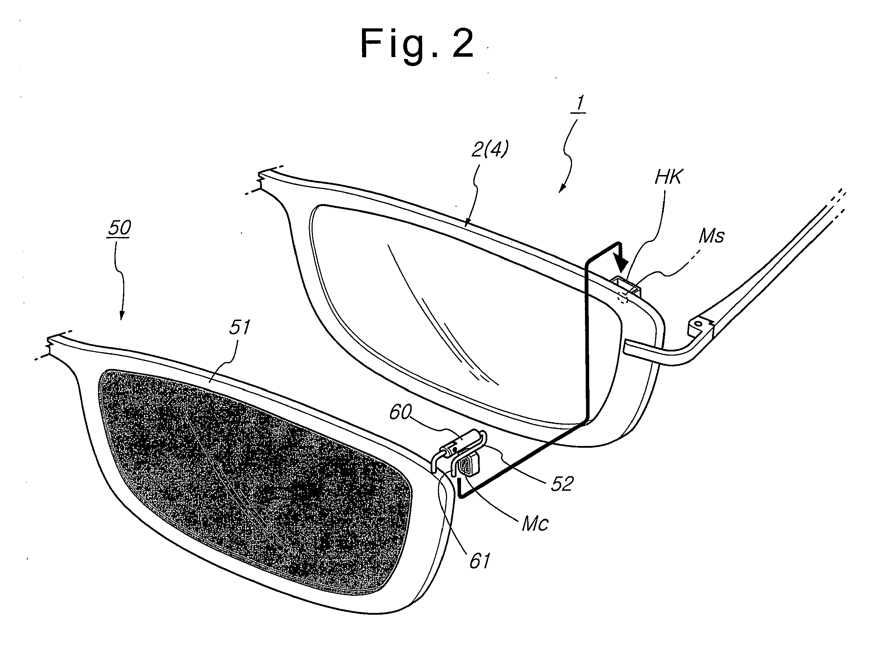

FIG. 2 illustrates an alternative configuration of the above described first embodiment. In the alternative configuration, the spectacles 1 is provided, at the upper end of the rear surface thereof, with a fitting hook HK, such that the spectacles magnet Ms is inserted into a fitting space defined in the fitting hook HK from the rear side of the spectacles 1. Accordingly, the spectacles magnet Ms is not exposed to the front side of the spectacles 1.

In the alternative configuration, the clip frame 51 of the sunshade-clip 50 is provided with a downwardly bent magnet arm 52'. The magnet arm 52' is used to receive the clip magnet Mc inserted therein, and protrudes rearward from the upper end of the clip frame 51. Also, the magnet arm 52' is provided with a hinge bar 60 and a holding bar 61. Specifically, the holding bar 61 extends forward from a distal end of the magnet arm 52' such that it is located in front of the clip magnet Mc. In cooperation with the clip magnet Mc, the holding bar 61 serves to allow the clip frame 51 of the sunshade-clip 50 to be mechanically caught by the spectacles frame 2 of the spectacles 1.

With the alternative configuration, the sunshade-clip 50 is able to be attached to the spectacles 1 by use of a magnetic attraction force and mechanical coupling force obtained from the spectacles magnet Ms and the fitting hook HK of the spectacles 1 and the clip magnet Mc and the holding bar 61 of the sunshade-clip 50. Furthermore, the sunshade-clip 50 is pivotally rotatable upward and downward about the hinge bar 60, and therefore, is able to be easily opened away from the spectacles 1 after being attached to the spectacles 1.

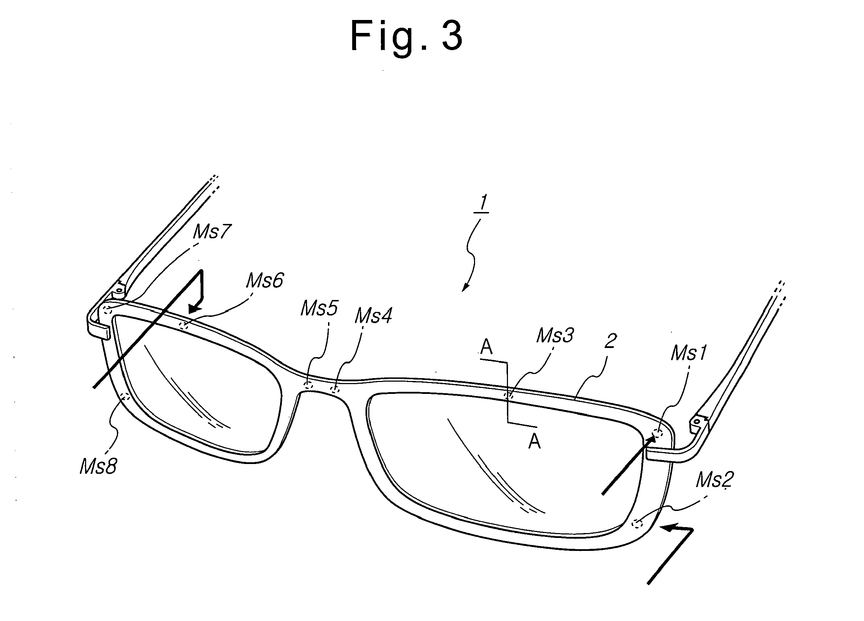

FIG. 3 illustrates various mounting positions of spectacles magnets. As shown in Fig. 3, the spectacles magnets Ms1, Ms2, Ms3, Ms4, Ms5, Ms6, Ms7, Ms8.. may be selectively mounted to various positions of the spectacles frame 2 of the spectacles 1. Although not shown, similarly, clip magnets may be selectively mounted to various positions of the clip frame of the sunshade clip.

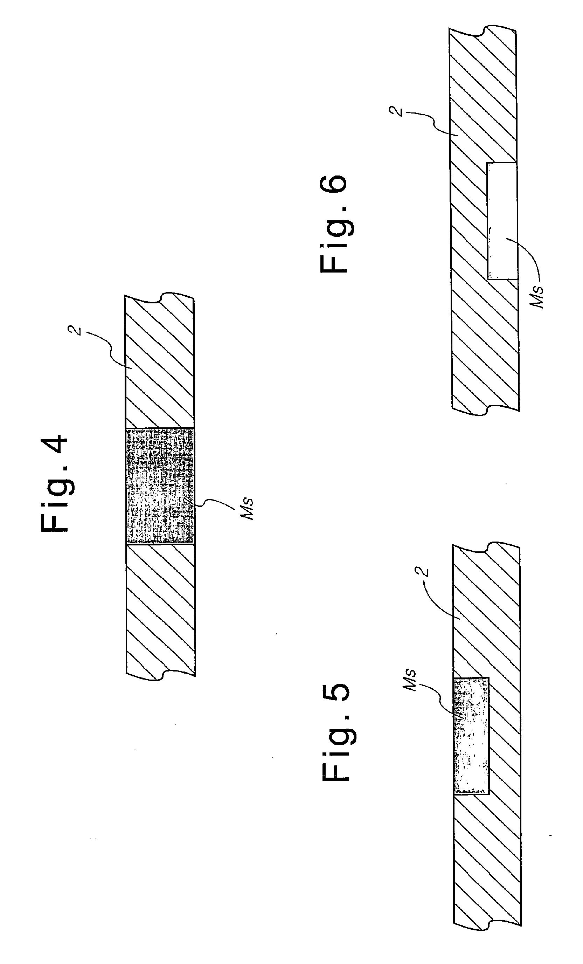

FIGS. 4 to 6 illustrate the advantage of the plate-shaped spectacles frame 2 of the spectacles 1. That is, when the spectacles frame 2 has a plate shape rather than a prior art wire frame, the spectacles magnet Ms may have a shape freely selected from among various shapes so long as it can be inserted into the spectacles frame 2 of the spectacles 1. This is possible due to the fact that the spectacles frame 2 is made of a thin metal or plastic plate.

Specifically, the spectacles magnet Ms may be inserted through the spectacles frame 2 as shown in FIG. 4, may be inserted to be exposed to the outside only from a front side of the spectacles frame 2 as shown in FIG. 5, or may be inserted to be exposed to the outside only from a rear side of the spectacles frame 2 as shown in FIG. 6. Accordingly, if necessary, the spectacles magnet Ms can be mounted so as not to reveal itself in front of a wearer.

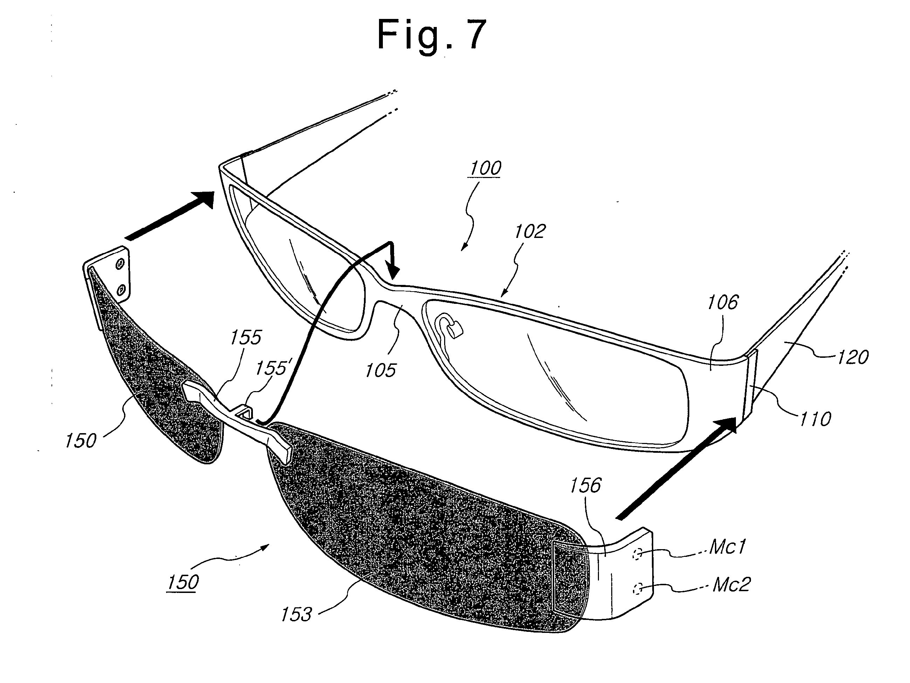

FIG. 7 illustrates a plate-shaped spectacles and sunshade-clip assembly according to a second embodiment of the present invention, which is based on the same technical idea as that of the above-described first embodiment. In the present invention, spectacles 100 include a spectacles frame 102, which is obtained by processing a plate similar to the first embodiment, but has a modified shape. In the spectacles 100 of the second embodiment, a pair of hinge legs 106 are integrally formed with the spectacles frame 102 such that they are bent rearward from opposite ends of the spectacles frame 102.

A pair of temple arms 120 are hingedly connected to the hinge legs 106. Each of the temple arms 120 is provided with an attachment piece 110, which is made of one selected from among various magnetic materials including a soft magnet.

A sunshade-clip 150 of the second embodiment, for use with the spectacles 100, may have a shape selected from among various shapes. For example, as shown in FIG. 7, the sunshade-clip 150 includes a pair of colored lenses 153 and 154 which are formed via an injection molding or plate cutting, and a clip bridge 155 to connect the colored lenses 153 and 154 to each other. Also, a pair of bent clip legs 156 may be integrally formed with the colored lenses 153 and 154, respectively, or may be previously fabricated and fixed to the colored lenses 153 and 154 as shown in FIG. 7. The clip legs 156 have the same contour as the hinge legs 106 of the spectacles 100. In the present embodiment, it is desirable that a holding hook 155' be provided at a rear surface of the clip bridge 155 to be caught by the nose bridge 105 of the spectacles 100.

As shown in FIG. 7, a pair of upper and lower clip magnets Mc1 and Mc2 are fixed to each of the clip legs 156 of the sunshade-clip 150, such that they are attached to an associated one of the attachment pieces 110 of the spectacles 100.

With the above-described configuration, the sunshade-clip 150 is able to be selectably assembled to the spectacles 100 as the clip magnets Mc1 and Mc2 are attached to and detached from the attachment pieces 110. In a state wherein the clip magnets Mc1 and Mc2 are attached to the attachment pieces. 110, no magnets protrude from the resulting spectacles and sunshade-clip assembly, whereby an improved outer appearance of the assembly can be accomplished. Also, since the clip magnets Mc1 and Mc2 are easily detachable from the attachment pieces 100 by simply folding the temple arms 120 of the spectacles 100, the spectacles and sunshade-clip assembly has an advantage of a convenient separation.

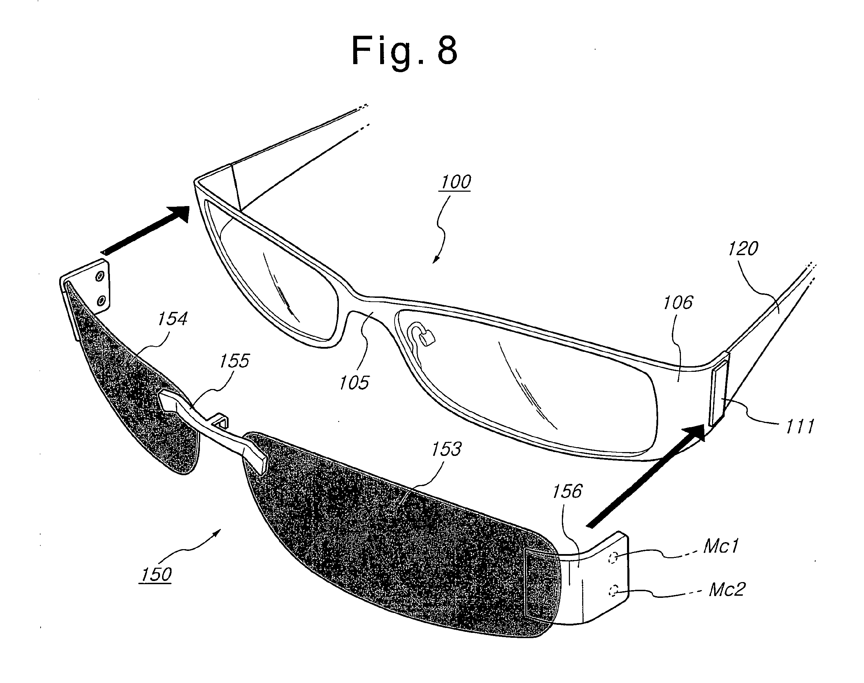

FIG. 8 illustrates a first alternative configuration of the second embodiment of FIG. 7. The first alternative configuration is similar to the second embodiment except for that attachment pieces 111 are attached to the hinge legs 106 of the spectacles 100 rather than being attached to the temple arms 120 hingedly connected to the hinge legs 106.

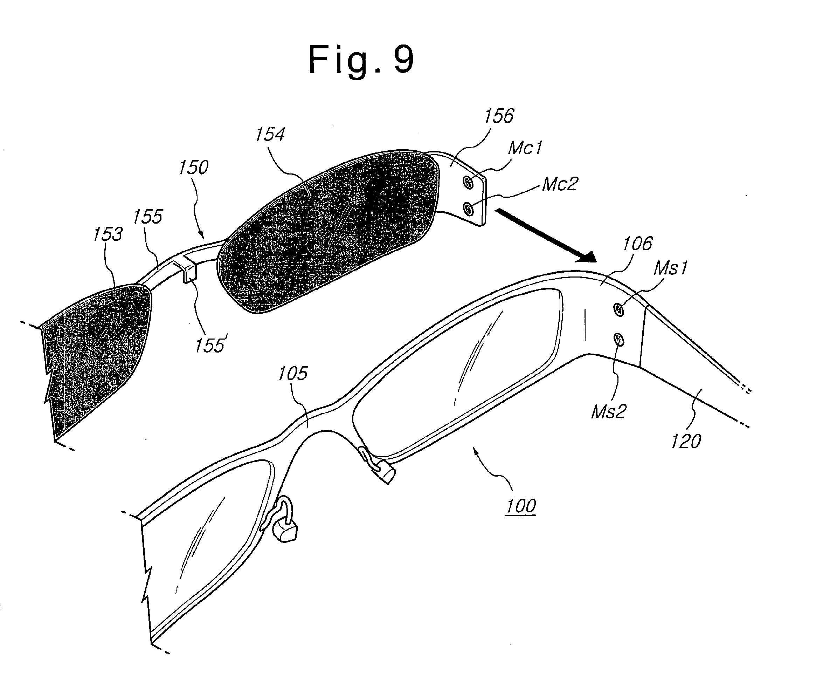

FIG. 9 illustrates a second alternative configuration of the second embodiment of FIG. 7. In the second alternative configuration, instead of each of the attachment pieces 110, a pair of spectacles magnets Ms1 and Ms2 are inserted into a rear surface of each of the hinge legs 106 of the spectacles 100 in a manner selected from among various mounting manners as shown in FIGS. 4 to 6, such that the spectacles magnets Ms1 and Ms2 correspond to the clip magnets Mc1 and Mc2.

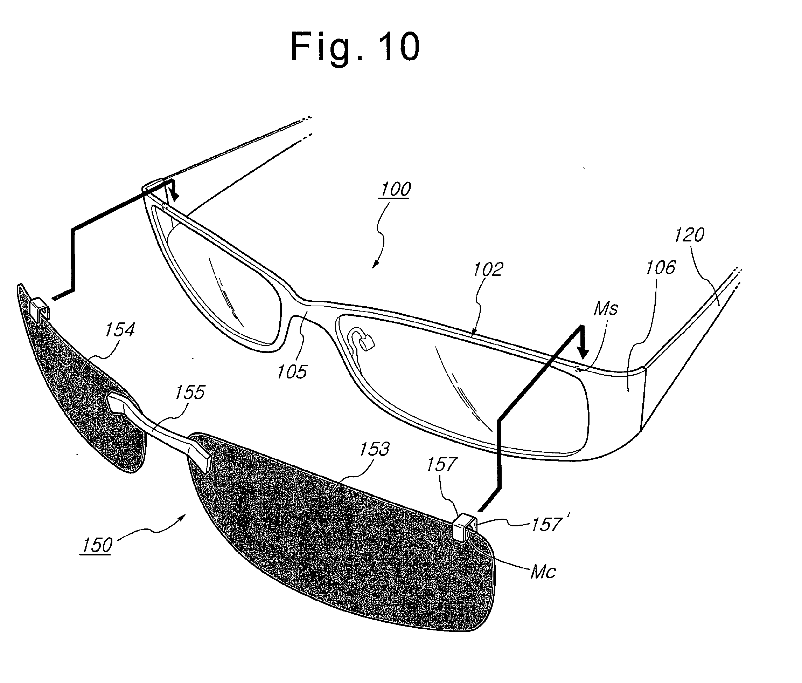

FIG. 10 illustrates a third alternative configuration of the second embodiment of FIG. 7. In the third alternative configuration, instead of fixing the attachment pieces 110 to the temple arms 120 hingedly connected to the hinge legs 106, a pair of spectacles magnets Ms are inserted into an upper end of the spectacles frame 102 of the spectacles 100 in a manner selected from among various methods as shown in FIGS. 4 to 6.

The sunshade-clip 150 for use with the spectacles 100, as shown in FIG. 10, includes the pair of colored lenses 153 and 154 formed via an injection molding or plate cutting, the clip bridge 155 to connect the colored lenses 153 and 154 to each other, and a pair of clip hooks 157 fixed to upper ends of the colored lenses 153 and 154 to protrude rearward, respectively.

Specifically, each of the clip hooks 157 has a dimension slightly greater than a thickness of the spectacles frame 102. A pair of clip magnets Mc are inserted into clip hook pieces 157' of the pair of the clip hooks 157.

With the above described configuration, the sunshade-clip 150 is able to be detachably attached to the spectacles 100 as the clip hooks 157 are mechanically caught by the spectacles frame 102 and the clip magnets Mc are attached to the spectacles magnets Ms.

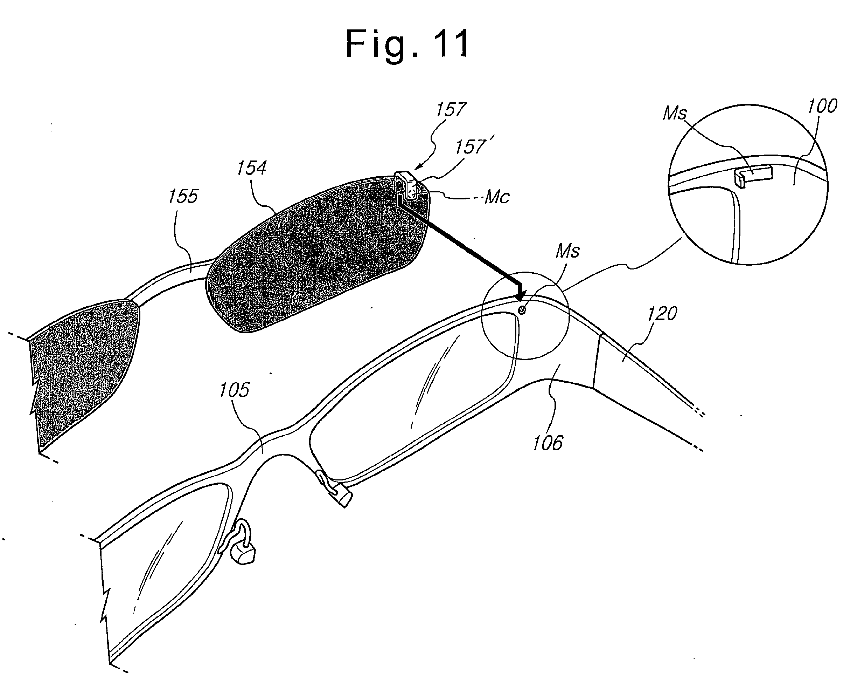

FIG. 11 is a rear perspective view of FIG. 10. In particular, the circle of FIG. 11 illustrates an alternative configuration of FIG. 10 wherein the spectacles magnet Ms takes the form of an elongated bent magnetic plate. The spectacles magnet Ms having the above configuration is advantages since it has a function of guiding the positioning and attachment of the clip magnet Mc.

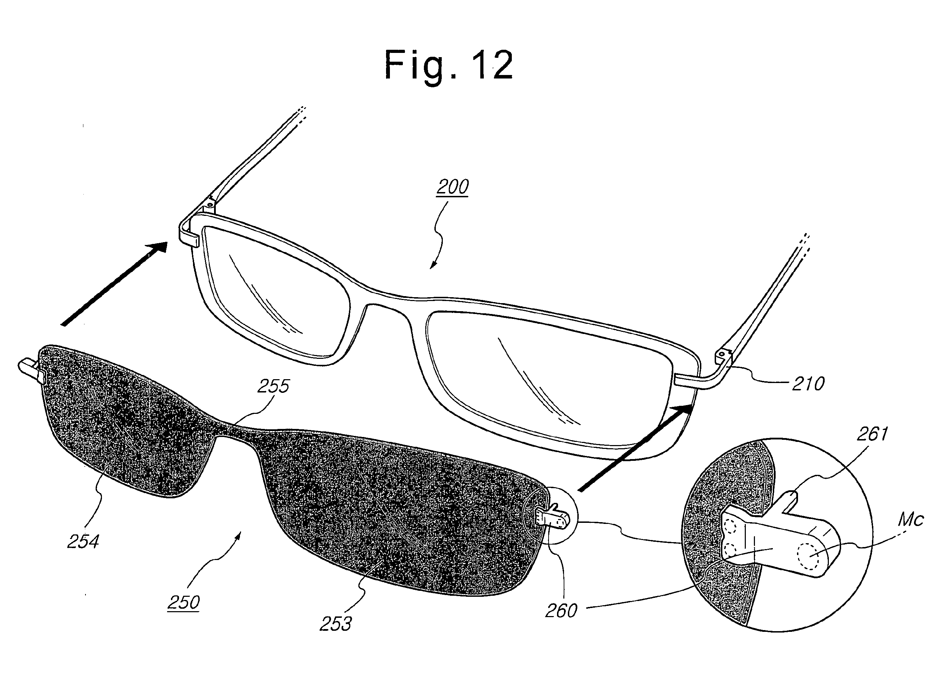

FIG. 12 illustrates a third embodiment of the present invention.

In the third embodiment, a pair of hinge legs 210 of a spectacles frame are separately fabricated and attached to spectacles 200 having a plate shape. A sunshade-clip 250 for use with the spectacles 200 includes a pair of colored lenses 253 and 254 and a clip bridge 255, which are integrally formed via an injection molding or plate cutting.

A pair of clip holders 260 are fixed to opposite ends of the colored lenses 253 and 254, such that clip magnets Mc are inserted into the clip holders 260, respectively, to be exposed to the rear side of the sunshade-clip 250. Preferably, each of the clip holders 260 is integrally formed with a holding piece 261.

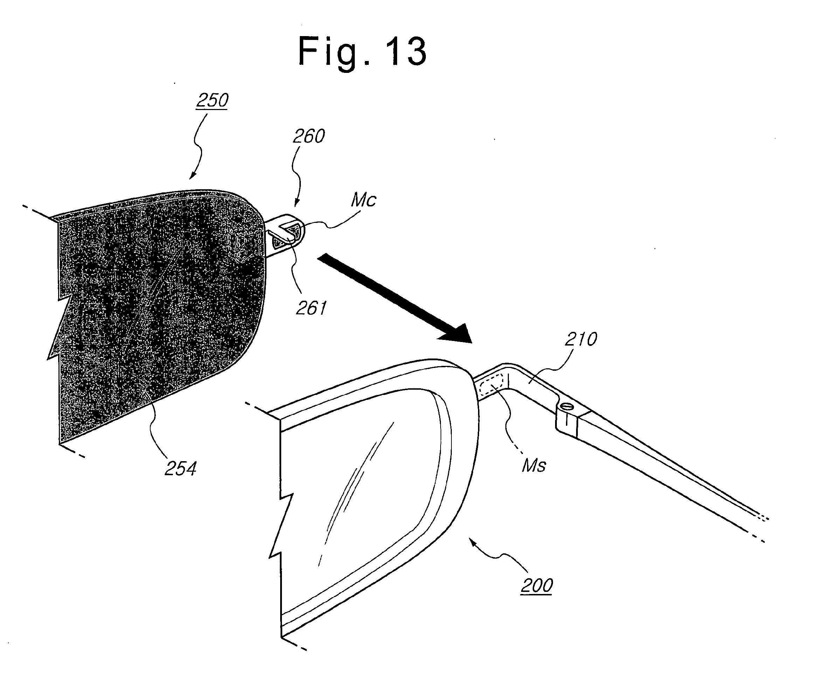

In the present embodiment, the hinge legs 210 of the spectacles 200 may be made of a magnetic material attractable by the clip magnet Mc, so as to eliminate the need of a magnet. Alternatively, as shown in FIG. 13, a spectacles magnet Ms may be inserted into a rear surface of each of the hinge leg 210 in a manner selected from among various mounting manners as shown in FIGS. 4 to 6, such that it is detachably attached to the clip magnet Mc.

As is apparent from the above description, the present invention provides a spectacles and sunshade-clip assembly in which magnets, which are used to detachably attach a sunshade-clip to spectacles, can be hidden as much as possible in their assembled state, and the shape of the sunshade-clip can be selected within a wider range.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A plate-shaped spectacles and sunshade-clip assembly comprising: spectacles(1) having a spectacles frame(2) configured to receive a pair of prescription lenses(3); a sunshade-clip(50) having a pair of colored lenses and configured to have a shape corresponding to that of the spectacles(1); and one or more magnets to detachably attach the sunshade-clip to the spectacles,
wherein the spectacles frame(2) of the spectacles(1) is a plate-shaped member formed by processing a plate or performing an injection molding process, one or more spectacles magnets(Ms) being fixedly inserted into the spectacles frame(2), and
wherein the sunshade-clip(50) further has one or more clip magnets(Mc) fixed at different positions corresponding to the spectacles magnets(Ms) to be detachably attached to the spectacles magnets(Ms), respectively.

2. The assembly as set forth in claim 1, wherein the one or more spectacles magnets(Ms) are inserted into the spectacles frame(2) at different positions such that they are exposed to the outside at a front or rear side of the spectacles frame(2) or they penetrate through the spectacles frame(2).

3. The assembly as set forth in claim 1, wherein, instead of a pair of the magnets(Ms,Mc) mounted at corresponding positions of both the spectacles and the sunshade-clip to be attached to each other, one of the pair of magnets(Ms,Mc) is substituted by a magnetic material to be attracted by the other magnet.

4. A plate-shaped spectacles and sunshade-clip assembly comprising: spectacles(100) having a spectacles frame(202) configured to receive a pair of prescription lenses; a sunshade-clip(150) having a pair of colored lenses and configured to have a shape corresponding to that of the spectacles(100); and one or more magnets to detachably attach the sunshade-clip(150) to the spectacles(100),
wherein the spectacles frame(102) of the spectacles(100) is a plate-shaped member formed by processing a plate or performing an injection molding process, and is integrally formed at opposite ends thereof with a pair of rearwardly-bent hinge legs(106), the hinge legs(106) being hingedly connected to a pair of temple arms(120) of the spectacles(100), respectively,
wherein the hinge legs(106) or temple arms(120) are provided with one or more spectacles magnets(Ms), or are made of a magnetic material, and
wherein the sunshade-clip further has a pair of clip legs(150) having the same contour as the hinge legs(106) of the spectacles(100), and the clip legs(156) are provided with one or more clip magnets(Mc), or are made of a magnetic material.

5. The assembly as set forth in claim 4, wherein, instead of a pair of the magnets (Ms,Mc) mounted at corresponding positions of both the spectacles(100) and the sunshade-clip(150) to be attached to each other, one of the pair of magnets(Ms,Mc) is substituted by a magnetic material to be attracted by the other magnet.

6. A plate-shaped spectacles and sunshade-clip assembly comprising: spectacles(100) having a spectacles frame(102) configured to receive a pair of prescription lenses; a sunshade-clip(150) having a pair of colored lenses and configured to have a shape corresponding to that of the spectacles(100); and one or more magnets to detachably attach the sunshade-clip(150) to the spectacles,
wherein the spectacles frame(102) of the spectacles(100) is a plate-shaped member formed by processing a plate or performing an injection molding process,
wherein one or more spectacles magnets(Ms) are mounted at different positions near an upper end of the spectacles frame(102), and
wherein the sunshade-clip(150) further has: one or more clip hooks(157) fixed to an upper end thereof to protrude rearward at different positions corresponding to the spectacles magnets(Ms); and one or more clip magnets(Mc) inserted into the clip hooks(157), respectively.

7. The assembly as set forth in claim 6, wherein the one or more spectacles magnets (Ms) are inserted into the spectacles(100) frame at the different positions such that they are exposed to the outside at a front or rear side of the spectacles frame(102) or they penetrate through the spectacles frame(102).

8. The assembly as set forth in claim 6, wherein, instead of a pair of the magnets(Ms,Mc) mounted at corresponding positions of both the spectacles(100) and the sunshade-clip (150) to be attached to each other, one of the pair of magnets(Ms,Mc) is substituted by a magnetic material to be attracted by the other magnet.

9. A plate-shaped spectacles and sunshade-clip assembly comprising: spectacles(200) having a spectacles frame(202) configured to receive a pair of prescription lenses; a sunshade-clip(250) having a pair of colored lenses and configured to have a shape corresponding to that of the spectacles(200); and one or more magnets to detachably attach the sunshade-clip to the spectacles,
wherein the spectacles frame(202) of the spectacles(200) is a plate-shaped member formed by processing a plate or performing an injection molding process,
wherein a pair of hinge legs(210) are attached to opposite ends of the spectacles frame(202), the hinge legs (210) being provided with one or more spectacles magnets(Ms) or being made of a magnetic material, and
wherein the sunshade-clip(250) further has a pair of clip holders(260) provided at opposite ends thereof to correspond to the hinge legs(210), and one or more clip magnets(Mc) inserted into the clip holders, respectively.

10. The assembly as set forth in claim 9, wherein, instead of a pair of the magnets(Ms,Mc) mounted at corresponding positions of both the spectacles(200) and the sunshade-clip(250) to be attached to each other, one of the pair of magnets(Ms,Mc) is substituted by a magnetic material to be attracted by the other magnet.
